# EUROPÄISCHE PATENTSCHRIFT

(11) **EP 1 989 455 B1**
(45) Veröffentlichungstag und Bekanntmachung des Hinweises auf die Patenterteilung: **13.01.2010**
(21) Anmeldenummer: 07712239.8
(22) Anmeldetag: 19.02.2007
(51) Int. Cl.: F16C 29/08

(54) **FÜHRUNGSSCHIENE MIT ABDECKBAND FÜR EIN LINEARLAGER**
GUIDE RAIL COMPRISING A COVER STRIP FOR A LINEAR BEARING
RAIL DE GUIDAGE COMPORTANT UNE BANDE DE RECOUVREMENT POUR UN PALIER LINÉAIRE

(30) Priorität: 24.02.2006 DE 102006008677
(43) Veröffentlichungstag der Anmeldung: 12.11.2008
(73) Patentinhaber: Schaeffler KG, 91074 Herzogenaurach (DE)
(72) Erfinder: SATTLER, Michael, 66482 Wattweiler (DE)
(86) Internationale Anmeldenummer: PCT/EP2007/051557
(87) Internationale Veröffentlichungsnummer: WO 2007/096329

(56) Entgegenhaltungen:
- EP-A1- 1 184 584
- EP-A2- 0 784 167
- DE-A1- 10 153 016
- US-A- 5 106 205

## Beschreibung

### Gebiet der Erfindung

Die vorliegende Erfindung betrifft eine Führungsschiene für ein Linearlager. Bei Linearlagern sind Führungswagen auf einer Führungsschiene längsverschieblich gelagert. Die Führungsschienen werden in der Regel an einem Gestell oder Maschinenbett angebracht.

Aus DE 101 53 016 A1 beispielsweise ist eine Anordnung eines Abdeckbandes an einer Linearführung bekannt geworden. Die Führungsschiene weist Bohrungen für Befestigungsschrauben auf, wobei ein Abdeckband in eine Längsnut der Führungsschiene eingesteckt ist. Die Nutwände der Längsnut weisen Hinterschneidungen auf. In diese Hinterschneidungen werden Materiallippen des Abdeckbandes unter Umformung hineingedrückt. Dies geschieht in der Weise, dass das Abdeckband, welches teilweise in die Längsnut eingesetzt ist, durch Einrollieren vollständig innerhalb der Längsnut angeordnet wird. In diesem Zustand wird das Abdeckband durch Formschluss in den Bereichen der Hinterschneidungen in der Führungsschiene gehalten. Damit eine einwandfreie Verformung der Materiallippen durch auf das Abdeckband ausgeübte Druckkräfte einwandfrei möglich ist, ist das Abdeckband aus zwei Lagen gebildet: Eine obere, der Umgebung ausgesetzte Decklage ist aus korrosionsbeständigem Stahl hergestellt. Eine die Materiallippen tragende Verformungslage ist vorzugsweise aus Reinaluminium gebildet. Reinaluminium lässt sich im Vergleich zu Stahl leicht plastisch verformen.

Aufgabe der vorliegenden Erfindung ist es, eine Führungsschiene für ein Linearlager gemäß dem Oberbegriff des Anspruchs 1 anzugeben, bei der das Abdeckband gegenüber dem bekannten Abdeckband vereinfacht ist.

Erfindungsgemäß wird diese Aufgabe dadurch gelöst, dass zum Einsetzen des Abdeckbandes in die Längsnut das Abdeckband um eine zur Führungschiene parallele Achse plastisch gewölbt ist, sodass seine Erstreckung quer zur Längsnut kleiner als der lichte Abstand zwischen den Nutwänden ist, wobei die konkave Seite des gewölbten Abdeckbandes der Längsnut zugewandt ist, und wobei nach dem Einsetzten in die Längsnut das gewölbte Abdeckband durch plastische Verformung eingeebnet wird, sodass die Halteleisten in die Hinterschnitte hineinverlagert sind. Vorzugsweise sind die Längsnut und das Abdeckband in der Weise aufeinander abgestimmt; dass das Abdeckband nach dem Einebnen in die Ebene der oberen Schienenseite eingeebnet ist.

Ein Vorteil kann darin gesehen werden, dass bei der erfindungsgemäßen Führungsschiene das Abdeckband einlagig ausgebildet sein kann. Es ist nicht erforderlich, weiche Halteleisten vorzusehen, die einfach plastisch zu verformen sind. Durch die plastische Wölbung des Abdeckbandes an sich ist es außerdem möglich mit deutlich reduzierten Andruckkräften das Abdeckband in die Längsnut hineinzudrücken. Ein weiterer Vorteil besteht darin, dass die Halteleisten einwandfrei an die Hinterschnitte angepasst sein können, sodass während des Einebnens des Abdeckbandes keine zusätzliche plastische Verformung an den Halteleisten erforderlich ist.

Im Querschnitt durch das Abdeckband gesehen, können die Halteleisten jeweils als Schulter ausgebildet sein, die an die Nutwand und den Hinterschnitt der Längsnut angepasst ist. Vorzugsweise umfasst die Schulter eine Hochseite und eine zu der Hochseite winklig angeordnete Querseite, wobei ein Abstand zwischen den Hochseiten der beiden Halteleisten des Abdeckbandes an den lichten Abstand zwischen den beiden Nutwänden der Längsnut angepasst ist. Bei dieser erfindungsgemäßen Weiterbildung ist in vorteilhafter Weise eine einwandfreie Ausrichtung des Abdeckbandes in der Längsnut gewährleistet. Die Führung des Abdeckbandes ist durch die beiden Nutwände der Längsnut sichergestellt. Der Abstand zwischen den Hochseiten der beiden Halteleisten kann etwas geringer ausfallen, als der Abstand zwischen den beiden Nutwänden der Längsnut. Auf diese Weise wird das Abdeckband einwandfrei in Längsrichtung der Führungsschiene orientiert. Ferner ist ein Abheben weg von dem Nutgrund der Längsnut ebenfalls dadurch ausgeschlossen, dass die Querseiten der Halteleisten an den Hinterschnitt der Längsnut angepasst sind.

Die Erfindung richtet sich zusätzlich auf ein Verfahren zum Einsetzen des Abdeckbandes in die Längsnut, wie es durch die oben erwähnten Verfahrenschritte beschrieben ist, bei dem insbesondere als vorteilhaft angesehen werden kann, dass das plastisch gewölbte Abdeckband mit geringer Andruckkraft in die Längsnut eingeebnet werden kann.

Nachstehend wird die Erfindung anhand eines in insgesamt drei Figuren abgebildeten Ausführungsbeispieles näher erläutert. Es zeigen:
- Figur 1: eine erfiridungsgemäße Führungsschiene für ein Linearla- ger in perspektivischer Darstellung,
- Figur 2: einen Verfahrensschritt zur Herstellung der erfindungsge- mäßen Führungsschiene und
- Figur 3: einen Ausschnitt der erfindungsgemäßen Führungsschie- nen in vergrößerter Darstellung.

### Ausführliche Beschreibung der Zeichnungen

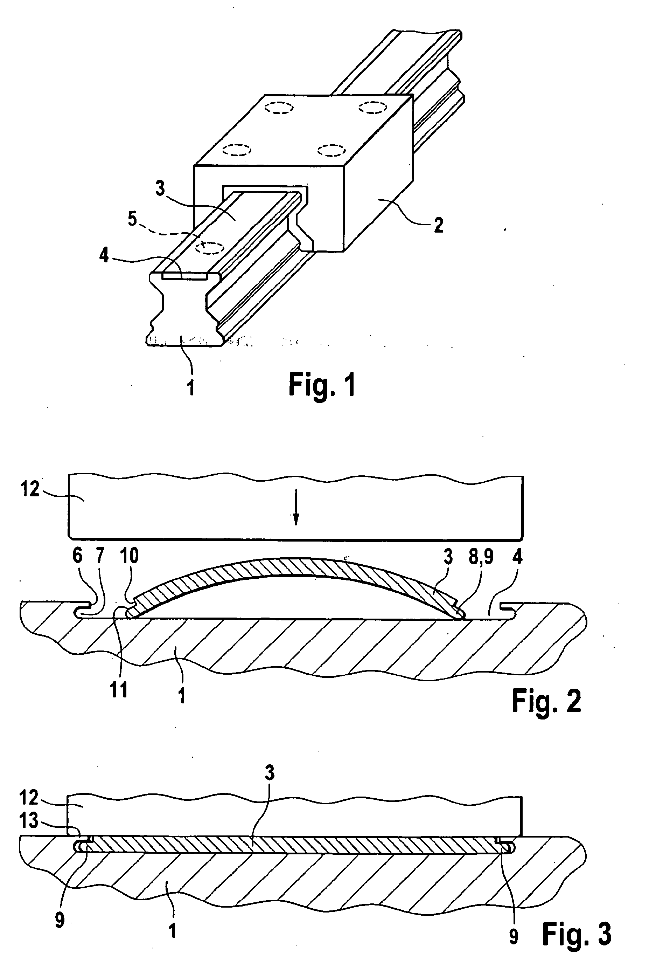

Die in Figur 1 abgebildete erfindungsgemäße Führungsschiene 1 trägt einen Führungswagen 2, der längsverschieblich an der Führungsschiene 1 gelagert ist. Die Führungsschiene 1 ist an ihrer oberen Schienenseite mit einem Abdeckband 3 versehen, das in einer Längsnut 4 angeordnet ist. Das Abdeckband 3 deckt Durchgangsöffnungen 5 für die Aufnahme von Befestigungselementen ab, wobei diese Durchgangsöffnungen 5 entlang der Längsnut 4 in Abstand hintereinander angeordnet sind.

In den Figuren 2 und 3 ist abgebildet, wie das Abdeckband 3 in die Führungsschiene 1 eingesetzt wird.

Die Längsnut 4 ist begrenzt durch gegenüberliegende Nutwände 6, wobei jede Nutwand 6 mit einem Hinterschnitt 7 versehen ist.

Das Abdeckband 3 weist an seinen Längsseiten jeweils eine Halteleiste 8 auf. Im vorliegenden Ausführungsbeispiel sind die Halteleisten jeweils als Schulter 9 ausgebildet, die eine Hochseite 10 und eine winklig dazu angeordnete Querseite 11 aufweist.

Figur 2 zeigte deutlich eine plastische Wölbung des Abdeckbandes 3, wobei die konkave Seite der konkaven Wölbung der Führungsschiene 1 und der Längsnut 4 zugewandt ist. Die Erstreckung des plastisch gewölbten Abdeckbandes 3 quer zur Längsnut 4 ist kleiner als ein lichter Abstand zwischen den Nutwände 6 der Längsnut 4.

Das Abdeckband 3 wird zunächst in die Längsnut 4 lediglich eingelegt. Ein hier schematisch angedeutetes Druckwerkzeug 12 drückt gegen die konvexe Seite des plastisch gewölbten Abdeckbandes 3, bis dieses schließlich in die Ebene der Längsnut 4 eingeebnet ist, sodass das Abdeckband 3 bündig mit der Schienenoberseite abschließt. Unter der plastischen Deformation des plastisch gewölbten Abdeckbandes 3 wird dessen Erstreckung quer zur Längsnut 4 größer. Unter dieser plastischen Deformation greifen die Schultern 9 des Abdeckbandes 3 in die Hinterschnitte 7 der Führungsschiene 1 ein. Auf diese Weise ist sichergestellt, dass das Abdeckband 3 einwandfrei in der Längsnut 4 gehalten ist. Das Abdeckband 3 kann nicht nach oben aus der Längsnut 4 herausgezogen werden, denn die Querseite 11 der Schulter 9 schlägt an eine Wand 13 des Hinterschnitts 7 an. Eine einwandfreie Ausrichtung in Längsrichtung der Führungsschiene ist dadurch gegeben, dass die Hochseiten 10 der Schultern 9 an den Nutwänden 6 ausgerichtet sind. Das Abdeckband 3 kann auf einfache Weise in die Längsnut 4 eingesetzt werden, wobei in einem einzigen Arbeitsgang ohne Aufbringung großer Einpresskräfte das Abdeckband sicher in die Längsnut 4 eingebracht und darin gehalten werden kann.

### Bezugszahlenliste

- 1: Führungsschiene
- 2: Führungswagen
- 3: Abdeckband
- 4: Längsnut
- 5: Durchgangsöffnung
- 6: Nutwand
- 7: Hinterschnitt
- 8: Halteleiste
- 9: Schulter
- 10: Hochseite
- 11: Querseite
- 12: Druckwerkzeug
- 13: Wand

## Patentansprüche

1. Führungsschiene (1) für ein Linearlager, mit einer entlang der Führungsschiene (1) an deren oberen Schienenseite angeordneten Längsnut (4), mit einem die Längsnut (4) nach außen verschließenden und an der Ebene der oberen Schienenseite bündig anliegenden Abdeckband (3), wobei ein lichter Abstand zwischen gegenüberliegenden Nutwänden (6) der Längsnut (4) kleiner ist als die Erstreckung des einzubauenden Abdeckbandes (3) quer zur Längsnut (4), und wobei zur Halterung des Abdeckbandes (3) an der Führungsschiene (1) die Nutwände (6) jeweils mit einem Hinterschnitt (7) versehen sind, und wobei an beiden Längsseiten des Abdeckbandes (3) vorgesehene Halteleisten (8) in die Hinterschnitte (7) eingreifen, **dadurch gekennzeichnet, dass** zum Einsetzen des Abdeckbandes (3) in die Längsnut (4) das Abdeckband (3) um eine zur Führungsschiene (1) parallele Achse plastisch gewölbt ist, so dass seine Erstreckung quer zur Längsnut (4) kleiner als der lichte Abstand zwischen den Nutwänden (6) ist, wobei die konkave Seite des gewölbten Abdeckbandes (3) der Längsnut (4) zugewandt ist, und wobei nach dem Einsetzen in die Längsnut (4) das gewölbte Abdeckband (3) durch plastische Verformung eingeebnet wird, so dass die Halteleisten (8) in die Hinterschnitte (7) hinein verlagert sind.

2. Führungsschiene (1) nach Anspruch 1, bei der die Halteleisten (8) jeweils als Schulter (9) ausgebildet sind, die an die Nutwand (6) und den Hinterschnitt (7) der Längsnut (4) angepaßt ist.

3. Führungsschiene (1) nach Anspruch 2, bei der die Schulter (9) eine Hochseite (10) und eine zu der Hochseite winklig angeordnete Querseite (11) aufweist, wobei ein Abstand zwischen den Hochseiten (10) der beiden Halteleisten (8) des Abdeckbandes an den lichten Abstand zwischen den beiden Nutwänden (6) der Längsnut (4) angepaßt ist.

4. Verfahren zum Einsetzen eines Abdeckbandes (3) in eine an einer oberen Schienenseite einer Führungsschiene (1) eines Linearlagers vorgesehenen Längsnut (4), wobei einander gegenüberliegende Nutwände (6) der Längsnut (4) jeweils mit einem Hinterschnitt (7) versehen sind, **dadurch gekennzeichnet, dass** zum Einsetzen des Abdeckbandes (3) in die Längsnut (4) das Abdeckband (3) um eine zur Führungsschiene (1) parallele Achse plastisch gewölbt wird, so dass seine Erstreckung quer zur Längsnut (4) kleiner als der lichte Abstand zwischen den Nutwänden (6) ist, wobei die konkave Seite des gewölbten Abdeckbandes (3) der Längsnut (4) zugewandt ist, und wobei nach dem Einsetzen in die Längsnut (4) das gewölbte Abdeckband (3) durch plastische Verformung eingeebnet wird, so dass an den Längsseiten des Abdeckbandes vorgesehene Halteleisten (8) in die Hinterschnitte (7) hinein verlagert werden.

5. Verfahren nach Anspruch 4, bei dem die Halteleisten (8) jeweils als Schulter (9) ausgebildet sind, die an die Nutwand (6) und den Hinterschnitt (7) der Längsnut (4) angepaßt ist.

6. Verfahren nach Anspruch 5, dem die Schulter (9) eine Hochseite (10) und eine zu der Hochseite (10) winklig angeordnete Querseite (11) aufweist, wobei ein Abstand zwischen den Hochseiten (10) der beiden Halteleisten (8) des Abdeckbandes (3) an den lichten Abstand zwischen den beiden Nutwänden (6) der Längsnut (4) angepaßt ist.

## Claims

1. Guide rail (1) for a linear bearing, with a longitudinal groove (4) which is arranged along the guide rail (1) on the upper rail side thereof, with a cover strip (3) which closes the longitudinal groove (4) to the outside and bears flush against the plane of the upper rail side, wherein a clear spacing between opposite groove walls (6) of the longitudinal groove (4) is smaller than the extent of the cover strip (3), which is to be fitted, transversely with respect to the longitudinal groove (4), and wherein, in order to secure the cover strip (3) on the guide rail (1), the groove walls (6) are each provided with an undercut (7), and wherein retaining strips (8) which are provided on both longitudinal sides of the cover strip (3) engage in the undercuts (7), **characterized in that**, in order to insert the cover strip (3) into the longitudinal groove (4), the cover strip (3) is plastically curved about an axis which is parallel to the guide rail (1) such that the extent of said cover strip transversely with respect to the longitudinal groove (4) is smaller than the clear spacing between the groove walls (6), the concave side of the curved cover strip (3) facing the longitudinal groove (4), and, after being inserted into the longitudinal groove (4), the curved cover strip (3) being leveled by means of plastic deformation such that the retaining strips (8) are displaced into the undercuts (7).

2. Guide rail (1) according to Claim 1, in which the retaining strips (8) are each designed as a shoulder (9) which is matched to the groove wall (6) and to the undercut (7) of the longitudinal groove (4).

3. Guide rail (1) according to Claim 2, in which the shoulder (9) has a high side (10) and a transverse side (11) arranged at an angle with respect to the high side, with a spacing between the high sides (10) of the two retaining strips (8) of the cover strip being matched to the clear spacing between the two groove walls (6) of the longitudinal groove (4).

4. Method for inserting a cover strip (3) into a longitudinal groove (4) which is provided on an upper rail side of a guide rail (1) of a linear bearing, wherein mutually opposite groove walls (6) of the longitudinal groove (4) are each provided with an undercut (7), **characterized in that**, in order to insert the cover strip (3) into the longitudinal groove (4), the cover strip (3) is plastically curved about an axis which is parallel to the guide rail (1) such that the extent of said cover strip transversely with respect to the longitudinal groove (4) is smaller than the clear spacing between the groove walls (6), the concave side of the curved cover strip (3) facing the longitudinal groove (4), and, after being inserted into the longitudinal groove (4), the curved cover strip (3) being leveled by means of plastic deformation such that retaining strips (8) provided on the longitudinal sides of the cover strip are displaced into the undercuts (7).

5. Method according to Claim 4, in which the retaining strips (8) are each designed as a shoulder (9) which is matched to the groove wall (6) and to the undercut (7) of the longitudinal groove (4).

6. Method according to Claim 5, in which the shoulder (9) has a high side (10) and a transverse side (11) arranged at an angle with respect to the high side (10), with a spacing between the high sides (10) of the two retaining strips (8) of the cover strip (3) being matched to the clear spacing between the two groove walls (6) of the longitudinal groove (4).

## Revendications

1. Rail de guidage (1) pour un palier linéaire, comprenant une rainure longitudinale (4) disposée le long du rail de guidage (1) sur son côté de rail supérieur, une bande de recouvrement (3) fermant vers l'extérieur la rainure longitudinale (4) et s'appliquant en affleurement contre le plan du côté du rail supérieur, une distance intérieure entre des parois de rainure opposées (6) de la rainure longitudinale (4) étant plus petite que l'étendue de la bande de recouvrement (3) à incorporer transversalement à la rainure longitudinal (4), et pour retenir la bande de recouvrement (3) contre le rail de guidage (1), les parois de rainure (6) étant pourvues à chaque fois d'une contre-dépouille (7), et des nervures de retenue (8) prévues sur les deux côtés longitudinaux de la bande de recouvrement (3) venant en prise dans les contre-dépouilles (7), **caractérisé en ce que** pour l'insertion de la bande de recouvrement (3) dans la rainure longitudinale (4), la bande de recouvrement (3) est cintrée plastiquement autour d'un axe parallèle au rail de guidage (1), de sorte que son étendue transversalement à la rainure longitudinale (4) soit inférieure à la distance intérieure entre les parois de rainure (6), le côté concave de la bande de recouvrement cintrée (3) étant tourné vers la rainure longitudinale (4), et après l'insertion dans la rainure longitudinale (4), la bande de recouvrement cintrée (3) étant aplanie par déformation plastique, de sorte que les nervures de retenue (8) soient déplacées à l'intérieur de la contre-dépouille (7).

2. Rail de guidage (1) selon la revendication 1, dans lequel les nervures de retenue (8) sont à chaque fois réalisées sous forme d'un épaulement (9), qui est adapté à la paroi de rainure (6) et à la contre-dépouille (7) de la rainure longitudinale (4).

3. Rail de guidage (1) selon la revendication 2, dans lequel l'épaulement (9) présente un côté vertical (10) et un côté transversal (11) disposé suivant un certain angle par rapport au côté vertical, une distance entre les côtés verticaux (10) des deux nervures de retenue (8) de la bande de recouvrement étant adaptée à la distance intérieure entre les deux parois de rainure (6) de la rainure longitudinale (4).

4. Procédé pour l'insertion d'une bande de recouvrement (3) dans une rainure longitudinale (4) prévue sur un côté de rail supérieur d'un rail de guidage (1) d'un palier linéaire, des parois de rainure (6), opposées l'une à l'autre, de la rainure longitudinale (4), étant pourvues à chaque fois d'une contre-dépouille (7), **caractérisé en ce que** pour l'insertion de la bande de recouvrement (3) dans la rainure longitudinale (4), la bande de recouvrement (3) est cintrée plastiquement autour d'un axe parallèle au rail de guidage (1), de sorte que son étendue transversalement à la rainure longitudinale (4) soit plus petite que la distance intérieure entre les parois de rainure (6), le côté concave de la bande de recouvrement cintrée (3) étant tourné vers la rainure longitudinale (4), et après l'insertion dans la rainure longitudinale (4), la bande de recouvrement cintrée (3) étant aplanie par déformation plastique, de sorte que des nervures de retenue (8) prévues sur les côtés longitudinaux de la bande de recouvrement soient déplacées à l'intérieur des contre-dépouilles (7).

5. Procédé selon la revendication 4, dans lequel les nervures de retenue (8) sont réalisées à chaque fois sous forme d'épaulement (9), qui est adapté à la paroi de rainure (6) et à la contre-dépouille (7) de la rainure longitudinale (4).

6. Procédé selon la revendication 5, dans lequel l'épaulement (9) présente un côté vertical (10) et un côté transversal (11) disposé suivant un certain angle par rapport au côté vertical (10), une distance entre les côtés verticaux (10) des deux nervures de retenue (8) de la bande de recouvrement (3) étant adaptée à la distance intérieure entre les deux parois de rainure (6) de la rainure longitudinale (4).
